# EUROPÄISCHE PATENTSCHRIFT

(11) **EP 1 410 969 B1**
(45) Veröffentlichungstag und Bekanntmachung des Hinweises auf die Patenterteilung: **02.08.2006**
(21) Anmeldenummer: 03017153.2
(22) Anmeldetag: 29.07.2003
(51) Int. Cl.: B60T 11/28, B60T 7/20

(54) **Umschalt-Einrichtung für Anhängerbremsventil**
Switch for trailer brake valve
Dispositif de commutation d'une soupape de freinage de remorque

(30) Priorität: 16.10.2002 DE 10248184
(43) Veröffentlichungstag der Anmeldung: 21.04.2004
(73) Patentinhaber: WABCO GmbH & Co. OHG, 30432 Hannover (DE)
(72) Erfinder: Frank, Dieter, 30171 Hannover (DE); Reinefeld, Wilfried, 30457 Hannover (DE); Sieker, Armin, 33611 Bielefeld (DE)
(74) Vertreter: Schrödter, Manfred

(56) Entgegenhaltungen:
- DE-A- 4 206 554
- DE-A- 10 139 748
- DE-A- 10 139 757
- GB-A- 649 429

## Beschreibung

Die Erfindung betrifft eine Umschalt-Einrichtung für ein in einem Anhängefahrzeug vorgesehenes Anhängerbremsventil.

Aus der im weiteren mit D1 bezeichneten DE 101 39 748 A1 ist ein Anhängerbremsventil für einen Anhänger mit elektronischer Bremsregelung (Anhänger-EBS-Regelung) bekannt; auf die D1 wird hier vollinhaltlich Bezug genommen. Aufgrund der Verwendung in Anhängern mit EBS-Regelung entfällt das Erfordernis einer Luftmengenverstärkung durch ein Relaisventil, und so ist das Anhängerbremsventil nach der D1 als Schieberventil aufgebaut.

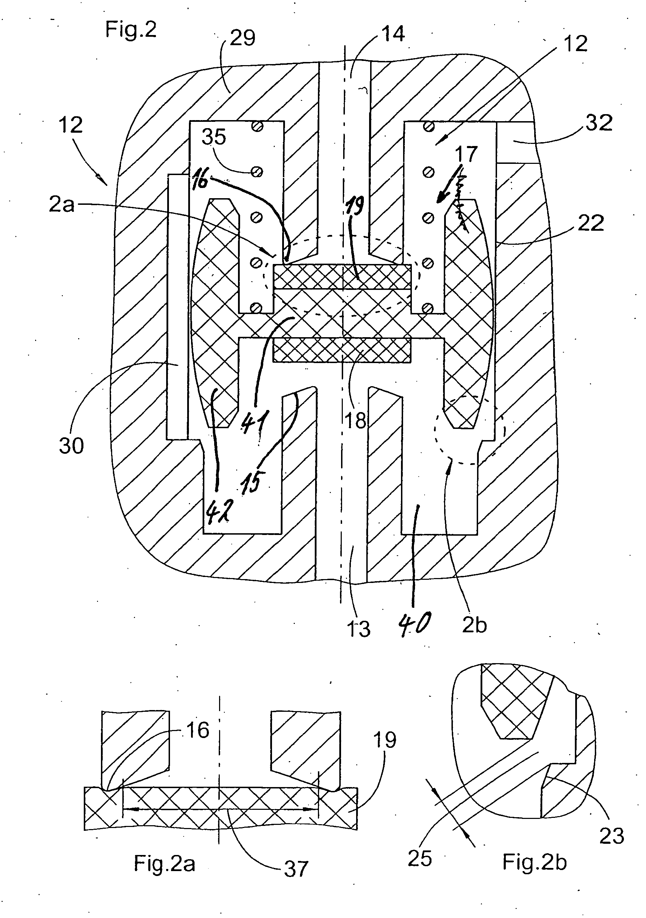

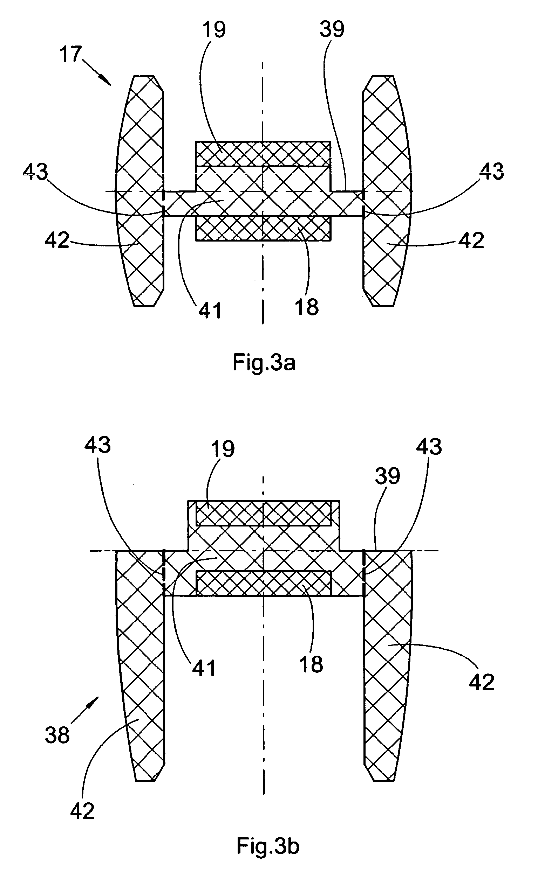

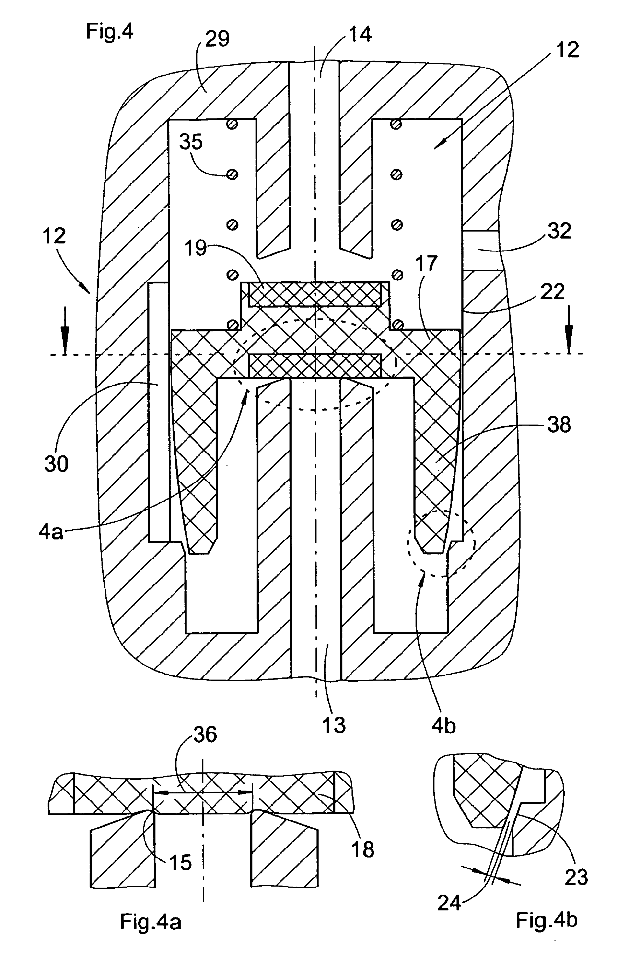

Dieses Anhängerbremsventil [dort (8)] weist zwei Stellungen auf, eine Ventil-Grundstellung [dort Fig. 2a, Fig. 3], bei der der Vorrats-Druckschlauch des Zugfahrzeugs [dort (30)] an den roten Kupplungskopf des Anhängefahrzeugs [dort (48)] angeschlossen ist, und eine Ventil-Abrißstellung [dort Fig. 2b, Fig. 4], bei der keine Verbindung des Vorrats-Druckschlauchs zum roten Kupplungskopf besteht.

Entsprechend der bekannten Funktionsweise von Anhängerbremsventilen wird in der Ventil-Grundstellung aus dem über den Brems-Druckschlauch [dort (30)] und über den gelben Kupplungskopf [dort (48)] am Bremsvorgabeanschluß [dort (4)] des Anhängerbremsventils anliegenden Druck ein Druck gebildet, der zur Weiterverarbeitung am Bremsdruckanschluß [dort (2)] des Anhängerbremsventils als Bremsdruck ausgegeben wird; bei der D1 wird der am Bremsvorgabeanschluß [dort (4)] anliegende Druck direkt zum Bremsdruckanschluß [dort (2)] durchgesteuert; vergl. hierzu dort Fig. 3.

In der Ventil-Abrißstellung wird dagegen der pneumatische Behälteranschluß [dort (3)] des Anhängerbremsventils pneumatisch mit dem Bremsdruckanschluß verbunden; in bekannter Weise erfolgt beim Abriß die Bremsung des Anhängefahrzeugs über die im Vorratsdruck-Behälter [dort (9)] des Anhängefahrzeugs gespeicherte Druckluft. In den Ausgestaltungen des Anhängerbremsventils nach der D1 entsprechend den dortigen Fig. 3, Fig. 4 ist als Umschalt-Einrichtung zum Wechsel zwischen der Ventil-Grundstellung und der Ventil-Abrißstellung ein Vorsteuerventil [dort (60)] vorgesehen, das dort in Fig. 5a, Fig. 5b konstruktiv erläutert ist.

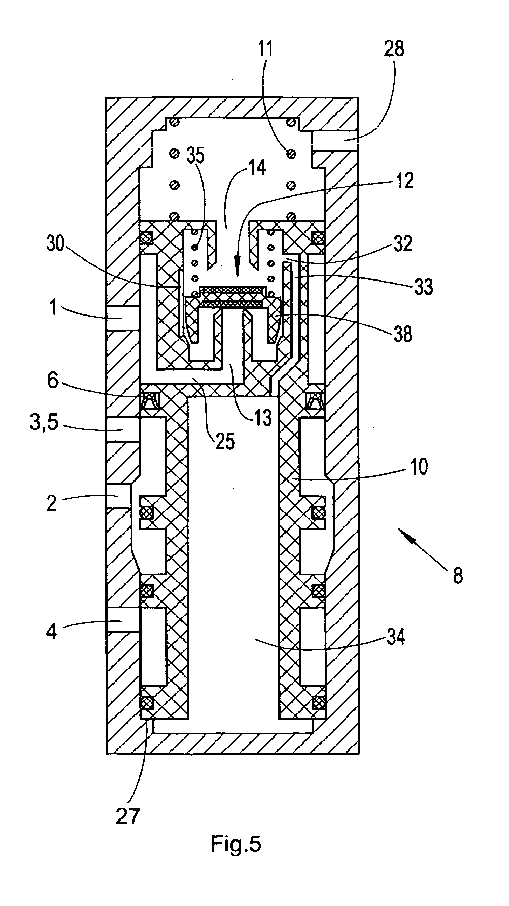

Dieses Vorsteuerventil besteht aus einem federbelasteten kegelförmigen Ventilschaltglied [dort (62), Fig. 5b], welches für den Fall, daß am Versorgungsanschluß [dort (1)]kein Druck anliegt -d. h. in der Abrißstellung- auf einem ersten Ventilsitz [dort (63)] anliegt. Steigt der Druck am Versorgungsanschluß an, so bildet sich entsprechend dem wirksamen Durchmesser [dort (65)] des ersten Ventilsitzes eine Druckkraft auf das Ventilschaltglied aus. Der ansteigende Druck erreicht die Schalt-Druckschwelle, wenn die Druckkraft gleich der durch die Rückstellfeder [dort (61)] auf das Ventilschaltglied ausgeübten Gegenkraft ist, und bei Überschreitung der Schalt-Druckschwelle hebt das Ventilschaltglied vom ersten Ventilsitz ab. Der aufgebaute Luftdruck wirkt dann auf die nun größere Fläche des Ventilschaltgliedes ein, so daß das Ventilschaltglied am zweiten Ventilsitz [dort (64)] zur Anlage kommt, welcher über einen größeren wirksamen Durchmesser [dort (66), Fig. 5a] verfügt.

Durch diese Vergrößerung des wirksamen Durchmessers wird eine Schalthysterese eingeführt: Wenn bei der Schalt-Druckschwelle einmal eine Umschaltung von der Abrißstellung nach Fig. 5b zur Grundstellung nach Fig. 5a stattgefunden hat, so bleibt die Grundstellung auch bei leichten Schwankungen des am Versorgungsanschluß anliegenden Druckes noch erhalten, und das Ventilschaltglied nimmt erst dann wieder die Abrißstellung ein, wenn der Druck am Versorgungsanschluß unter die um die Schalthysterese reduzierte Schalt-Druckschwelle abgesunken ist.

Wenn durch eine sehr langsame Druckerhöhung am Versorgungsanschluß die Schalt-Druckschwelle nur schleichend durchfahren wird, so bewirkt die Querkraftkomponente der Rückstellfeder, daß das Ventilschaltglied nicht parallel vom Ventilsitz abhebt, sondern zunächst nur leicht kippt, und daß sich an der Kipp-Öffnung ein kleiner Leckage-Luftstrom ausbildet, welcher über die Entlüftung [dort Fig. 4 (57)] zur Atmosphäre abgeleitet wird. Übersteigt die Druckluft-Nachförderung diesen Leckage-Luftstrom, so hebt das Ventilschaltglied komplett ab und die Umschaltung findet in der beschriebenen Weise statt.

Ist jedoch die Druckluft-Nachförderung sehr gering, so kann es vorkommen, daß sich durch die Leckage-Entlüftung kein ausreichender Staudruck zum vollständigen Abheben des Ventilschaltgliedes vom Ventilsitz mehr ausbildet, und damit verbleibt das Ventilschaltglied in der Abrißstellung.

Der kritischste Fall für eine Belüftung aus der Abrißstellung tritt dann auf, wenn sowohl das Zugfahrzeug als auch das an das Zugfahrzeug angeschlossene Anhängefahrzeug entlüftet sind (leere Vorratsbehälter) und dieser leere Fahrzeugzug über "Zündung ein" in Betrieb genommen wird.

Der Kompressor im Zugfahrzeugs ist für die Förderleistung und damit für den Druckgradienten beim Druckanstieg verantwortlich; hier wird davon ausgegangen, daß die Förderleistung im "worst case"-Fall 100 Ndm³/min [Normliter pro Minute] beträgt.

Zur Verbesserung der Sicherheit wird an der Anhänger-Schnittstelle mit einer weiter reduzierten Förderleistung gerechnet, so daß hier beispielsweise davon ausgegangen wird, daß die minimale Förderleistung am Versorgungseingang des Anhängerbremsventils 50 Ndm³/min beträgt; dieser Wert stellt die minimale Anhänger-Versorgungsleistung dar.

Aus der DE 101 39 757 A1 [im weiteren mit D2 bezeichnet] ist ein Anhängerbremsventil bekannt, das ebenfalls für einen Anhänger mit elektronischer Bremsregelung vorgesehen ist.

Bei der D2, auf die hier ebenfalls vollinhaltlich Bezug genommen wird, ist ein separater Parkanschluß für den Anschluß eines Parkventils als Teil eines üblichen Doppel-Löseventils vorgesehen. Entsprechend der D2 wird als zusätzliche Sicherheit bei abgestelltem Anhänger, d. h. wenn sich das Anhängerbremsventil in seiner Abrißstellung befindet, in der Fahrstellung des Parkventils über den Anhängerbremsventil-Parkanschluß unter Umgehung des üblichen Rückschlagventils, Vorratsbehälterdruck in die Federspeicher-Lösekammern eingespeist, wobei wie in der Abrißstellung üblich, die Federspeicher-Betriebsbremskammern über den Bremsdruckanschluß mit Vorratsbehälterdruck beaufschlagt sind. Beim leckagebedingten Vorratsbehälter-Druckabbau nimmt nun die Wirkung der Betriebsbremsen ab, gleichzeitig nimmt jedoch die Wirkung der Feststellbremsen zu: Damit ist bei jedem Druckniveau eine Restbremswirkung für den Anhänger vorhanden, die entweder von den Betriebs- oder von den Feststellbremsen kommt, und auf diese Weise wird ein automatisches Wegrollen des Anhängers verhindert.

In den Ausgestaltungen nach Fig. 4, Fig. 5 und Fig. 6 der D2 ist ein zur erläuterten Umschalt-Einrichtung der D1 gleich aufgebaute Umschalt-Einrichtung als Vorsteuerventil zur Umschaltung zwischen den Grund- und Abrißstellungen des Anhängerbremsventils vorgesehen.

Aus der GAB 649 429 A ist eine in einer Kraftfahrzeug-Bremsanlage angeordnete pneumatische Umschalt-Ventileinrichtung bekannt, welche einen pneumatischen Eingang, einen pneumatischen Entlüftungs-Ausgang und ein federbelastetes Ventilschaltglied aufweist, wobei das Ventilschaltglied bei drucklosem Eingang, der Ventil-Ausgangsstellung, an einem ersten Ventilsitz, und im Fall, daß ein am Eingang anliegender Druck eine festgelegte Druckschwelle überschreitet, der Ventil-Schaltstellung, in Richtung der Ventilschaltglied-Betätigungsrichtung verschoben und an einem zweiten Ventilsitz angelegt ist, und wobei der erste Ventilsitz einen kleineren Durchmesser als der zweite Ventilsitz aufweist. Das Ventilschaltglied ist als rotationssymmetrischer Ventilschaltkörper ausgebildet, welcher in einer kreiszylindrischen Führungsfläche im Ventilgehäuse gleitend und verschieblich gelagert ist, wobei die Kreiszylinderachse die Ventilschaltglied-Betätigungsrichtung darstellt. Der Ventilschaltkörper besteht aus einem senkrecht zur Kreiszylinderachse ausgerichteten kreisrunden Schließkörper und einem hermetisch dicht mit diesem verbundenen, als rotationssymmetrischer Hohlkörper ausgebildeten Führungskörper, dessen Achse die Kreiszylinderachse darstellt. Der hohlkörperförmige Führungskörper erstreckt sich räumlich, ausgehend von dem Schließkörper, in Richtung des zweiten Ventilsitzes. Der erste Ventilsitz bildet mit dem Ventilschaltkörper ein erstes Ventil, welches einem Druckraum der Umschalt-Ventileinrichtung zugeordnet ist, und der zweite Ventilsitz bildet mit dem Ventilschaltkörper ein zweites Ventil, welchem ein Raum der Umschalt-Ventileinrichtung zugeordnet ist, der über das zweite Ventil mit der Atmosphäre verbindbar ist.
Desweiteren enthält die Umschalt-Ventileinrichtung ein drittes Ventil, welches bei geöffnetem ersten Ventil einen an der Umschalt-Ventileinrichtung angeordneten Verbraucheranschluss mit dem Druckraum verbindet und den dem zweiten Ventil zugeordneten Raum gegen den Verbraucheranschluss absperrt, bzw. welches bei geschlossenem ersten Ventil und geöffnetem zweiten Ventil den Verbraucheranschluss gegen den Druckraum absperrt und mit dem dem zweiten Ventil zugeordneten Raum der Umschalt-Ventileinrichtung verbindet.
Durch die Anordnung des dritten Ventils in der Umschalt-Ventileinrichtung soll es ermöglicht werden, nach dem Schließen des ersten Ventils möglicherweise im Verbraucher verbliebenen Restdruck zur Atmosphäre hin abzubauen.

Der Erfindung liegt also die Aufgabe zugrunde, eine Umschalteinrichtung insbesondere für ein Anhängerbremsventil zum Wechsel zwischen der Ventil-Grundstellung und der Ventil-Abrißstellung anzugeben, die ein sicheres Ventil-Schalten auch bei einer festgelegten, vergleichsweise geringen Anhänger-Förderleistung gewährleistet.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Die Erfindung hat den Vorteil, daß die Umschalt-Einrichtung nicht nur für den Wechsel von Stellungen eines Anhängerbremsventils, sondern auch als eigenständige Ventileinrichtung für ganz andere Anwendungen einsetzbar ist. Bei diesen Anwendungen ist die Eigenschaft der Umschalt-Einrichtung als positionsstabiles Wechselventil von besonderem Vorteil, insbesonders wird mit der erfindungsgemäßen Lösung eine stabile Umschalt-Druckschwelle bei einem nur sehr geringen erforderlichen Umschalt-Luftstrom gewährleistet.

Die Erfindung wird im folgenden anhand eines Ausführungsbeispiels, das in den Zeichnungen dargestellt ist, näher erläutert.

Es zeigen:

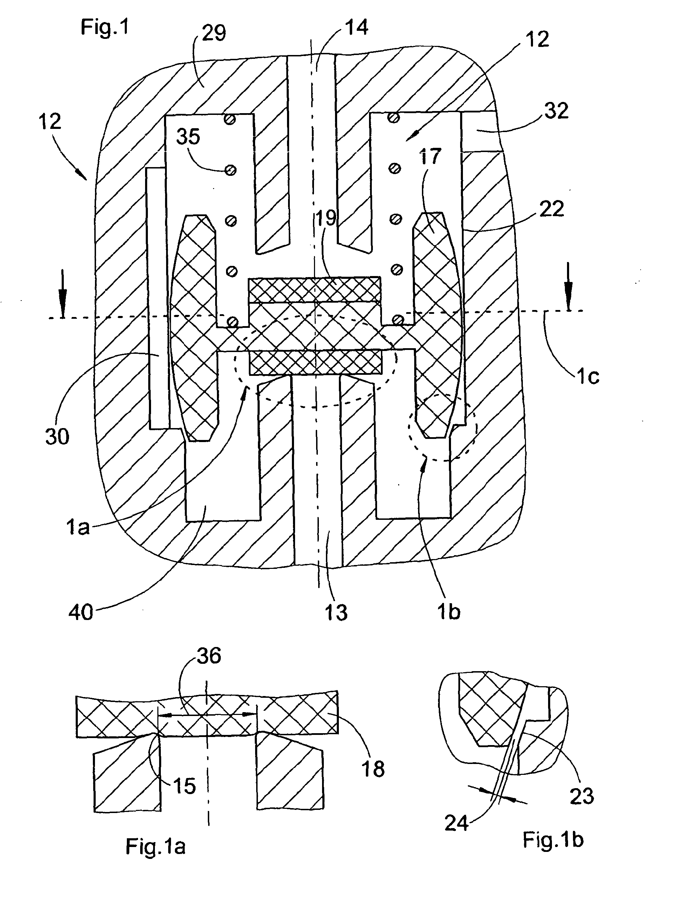

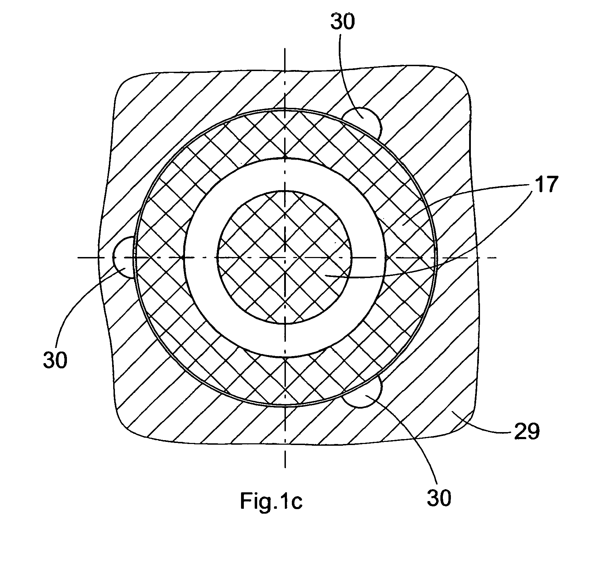

- Fig. 1: Die Umschalt-Ventileinrichtung in ihrer Ventil-Ausgangsstellung bei drucklosem Pneumatikeingang;
- Fig. 2: die Umschalt-Ventileinrichtung in ihrer Ventil-Schaltstellung bei Druckbeaufschlagung des Pneumatikeingangs;
- Fig. 3a: den Ventilschaltkörper für die UmschaltVentileinrichtung in H-Form
- Fig. 3b: den Ventilschaltkörper für die UmschaltVentileinrichtung in II-Form;
- Fig. 4: die Umschalt-Ventileinrichtung nach Fig. 1 bei Verwendung eines Ventilschaltkörpers nach Fig. 3b;
- Fig. 5: ein Anhängerbremsventil, das von einem Anhängerbremsventil nach der D1 ausgeht, in dessen Ventilschieber die Umschalt-Ventileinrichtung integriert ist, und zwar in ihrer Ventil-Ausgangsstellung entsprechend Fig. 4, bei der sich das Anhängerbremsventil in seiner Ventil-Abrißstellung befindet;

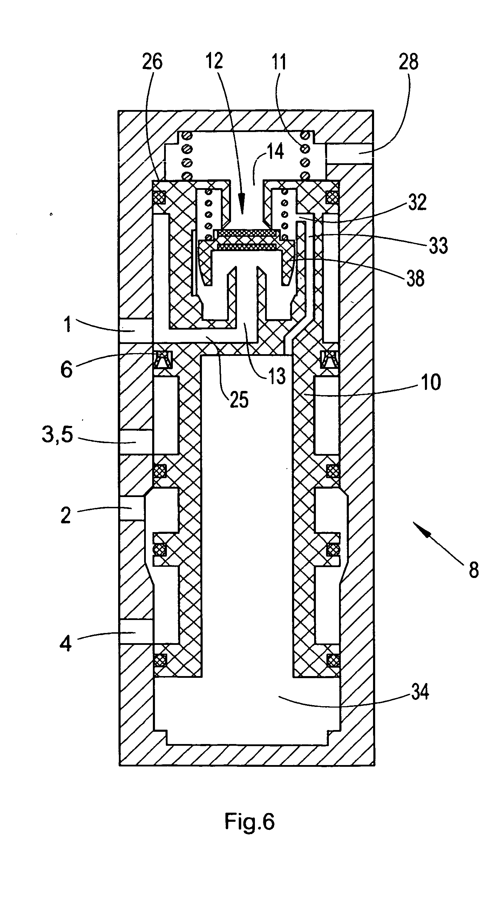

- Fig. 6: das Anhängerbremsventil nach Fig. 5, bei dem sich die Umschalt-Ventileinrichtung entsprechend Fig. 2 in der Ventil-Schaltstellung befindet, und bei der das Anhängerbremsventil in seine Ventil-Grundstellung versetzt ist;

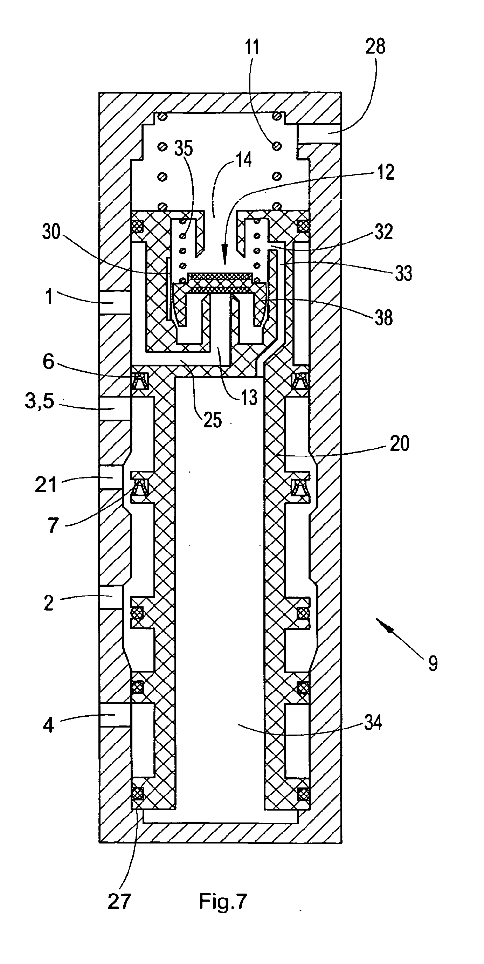

- Fig. 7: ein Anhängerbremsventil, das von einen Anhängerbremsventil nach der D2 ausgeht, in dessen Ventilschieber die Umschalt-Ventileinrichtung integriert ist, und zwar in ihrer Ventil-Ausgangsstellung entsprechend Fig. 4, bei der sich das Anhängerbremsventil in seiner Ventil-Abrißstellung befindet;

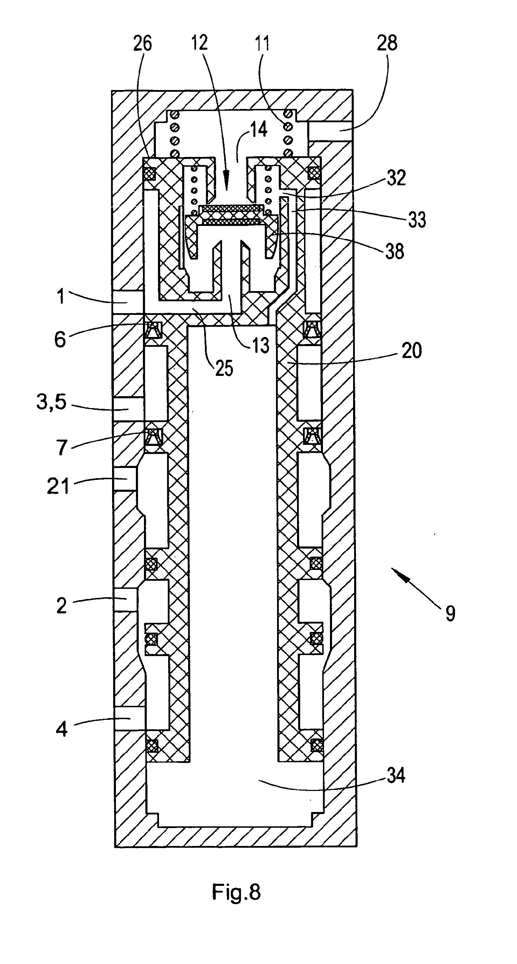

- Fig. 8: das Anhängerbremsventil nach Fig. 7, bei dem sich die Umschalt-Ventileinrichtung entsprechend Fig. 2 in der Ventil-Schaltstellung befindet, und bei der das Anhängerbremsventil in seine Ventil-Grundstellung versetzt ist;

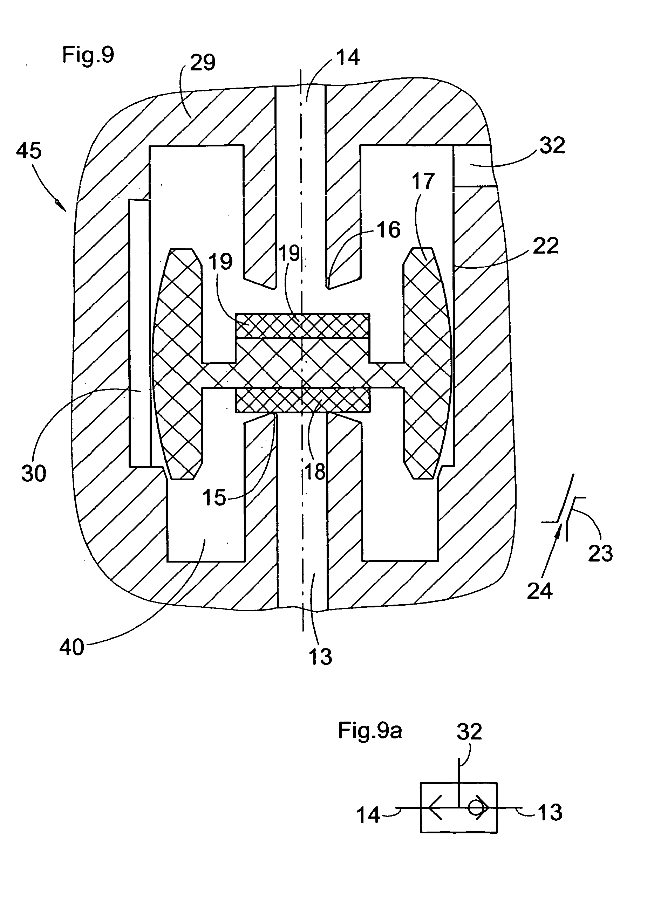

- Fig. 9: die Konstruktion eines Wechselventils unter Nutzung der Technik des erfindungsgemäßen Ventilschaltkörpers nach Fig. 3a;

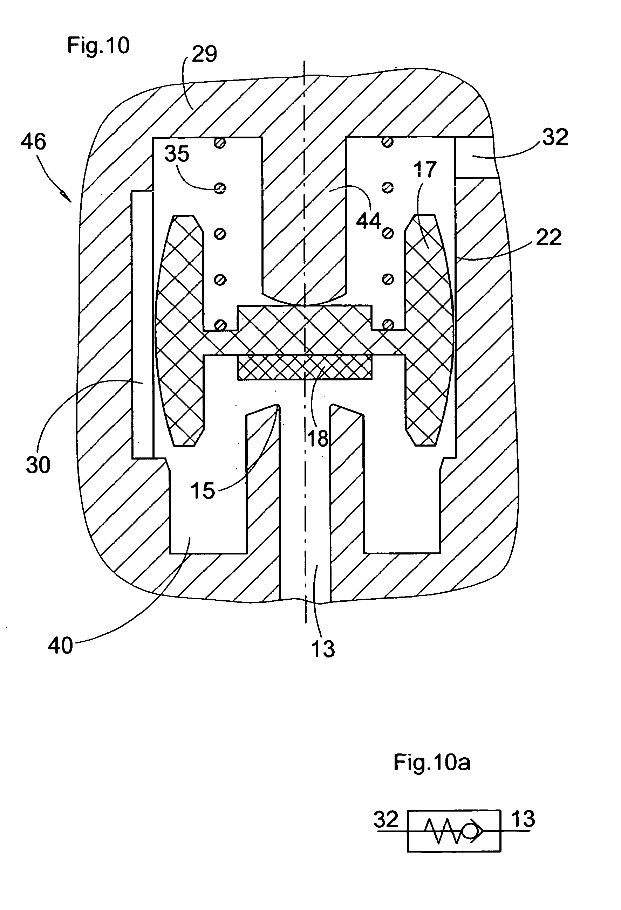

- Fig. 10: die Konstruktion eines Rückschlagventils unter Nutzung der Technik des erfindungsgemäßen Ventilschaltkörpers nach Fig. 3a.

Entsprechend Fig. 1 besteht die in einem Gehäuse (29) angeordnete pneumatische Umschalt-Ventileinrichtung (12) aus einem mit einer Umschalt-Ventilfeder (35) belasteten Ventilschaltglied, das als rotationssymmetrischer H-förmiger Ventilschaltkörper (17) ausgebildet ist und längs einer gehäusefesten kreiszylindrischen Führungsfläche (22) gleitend und in einer Ventilschaltglied-Betätigungsrichtung, nämlich gegen die Wirkungsrichtung der Umschalt-Ventilfeder (35), verschieblich gelagert ist, wobei die Richtung der Kreiszylinderachse entgegen der Wirkung der Umschalt-Ventilfeder (35) die Ventilschaltglied-Betätigungsrichtung darstellt.

Für die Umschalt-Ventileinrichtung (12) sind ein pneumatischer Eingang (13), ein pneumatischer Schaltausgang (32) und ein pneumatischer Entlüftungs-Ausgang (14) vorgesehen; es sind weiter ein erster (15) und zweiter [(16), Fig. 2] Ventilsitz vorgesehen, wobei bei drucklosem Eingang (13) der Ventilschaltkörper (17) durch die Kraft der Umschaltventil-Feder (35) am ersten Ventilsitz (15) angelegt ist; dies stellt die Ausgangsstellung der Ventileinrichtung (12) dar.

Der H-förmige Ventilschaltkörper (17) ist in Fig. 3a dargestellt; er besteht aus einem zentral angeordneten Schließkörper (41) in der Form einer Kreisscheibe mit einem ersten (18) und einem zweiten (19) Elastomer-Dichtelement und einem mit dem Schließkörper (41) vorzugsweise einstückig verbundenen Führungskörper (42) in Form eines rotationssymmetrischen Hohlkörpers. Der Deutlichkeit halber sind in Fig. 3a gestrichelt gedachte Trennungslinien (43) zwischen dem Schließkörper (41) und dem Führungskörper (42) eingezeichnet. Der Führungskörper (42) ist mit einer tonnenförmig geformten, konvex gewölbten Außenfläche ausgestattet.

Für den Eingriff der Umschaltventil-Feder (35) [vgl. Fig. 1] ist am H-förmigen Ventilschaltkörper (17) nach Fig. 3a eine Stützfläche (39) vorgesehen, die mittig zwischen den jeweiligen zu den Ventilsitzen (15, 16) weisenden Außenflächen der Elastomer-Dichtelemente (18) und (19) angeordnet ist, so daß die Querkraftkomponente der Umschaltventil-Feder (35) in der Mittelebene des Ventilschaltgliedes (17) eingreift und damit der Einfluß der Querkraft auf beide Elastomer-Dichtelemente (18, 19) im Mittel mit der geringsten Kippwirkung erfolgt, bezogen auf die Mittelachse des Ventilschaltkörpers (17). Damit wird für das unten erläuterte, besonders kritische Umschalten in die Ventil-Schaltstellung nach Fig. 2 erreicht, daß sich der Ventilkörper (17) parallel vom ersten Ventilsitz (15) abhebt.

Im eingebauten Zustand [Fig. 1] ist erkennbar, daß die Kreiszylinderachse der Führungsfläche (22) identisch mit der Hohlkörper-Achse des Führungskörpers (42) ist, so daß der Schließkörper (41) senkrecht zur Kreiszylinderachse ausgerichtet ist und daß der Führungskörper (42), ausgehend vom Schließkörper (41), sich räumlich in beiden Richtungen längs seiner Hohlkörper-Achse zum ersten [(15), Fig. 1a] und zum zweiten [(16), Fig. 2a] Ventilsitz erstreckt, wodurch sich die erläuterte Ausbildung mit H-förmigem Querschnitt ergibt.

Durch die ballig konvexe Ausbildung des Führungskörpers (42) wird bei der Verschiebung des Ventilschaltkörpers (17) längs der Führungsfläche (22) entsprechend Fig. 1 diese Führungsfläche jeweils längs einer Umfangs-Kreislinie berührt, was die Reibung reduziert. Dies stellt eine spielfreie Betrachtung dar. Bei Berücksichtigung des notwendigen Spiels berührt streng genommen der Ventilschaltkörper (17) die Führungsfläche (22) jeweils nur an einem Punkt.

Entsprechend Fig. 1 ist an der kreiszylindrischen Führungsfläche (22) an mindestens einer Stelle eine umlaufende ringförmige Ausformung (23) am Gehäuse (29) vorgesehen, welche den Durchmesser verengt. In Fig. 1 ist hierzu gestrichelt ein Ausschnitt (1b) eingezeichnet, der in Fig. 1b vergrößert dargestellt ist. An der Stelle der verengenden Ausformung (23) ist zwischen dem Ventilschaltkörper (17) und der Ausformung (23) in der dargestellten Position des Ventilschaltkörpers (17) ein schmaler Drossel-Ringspalt (24) mit festgelegter Breite gebildet.

Die vergrößerte Darstellung Fig. 1a des gestrichelt gezeichneten Ausschnittes (1a) nach Fig. 1 zeigt die Ausgestaltung des ersten Ventilsitzes (15). Der Aufbau dieses Ventilsitzes entspricht auch dem Aufbau des zweiten Ventilsitzes (16) entsprechend Fig. 2a nach dem Ausschnitt (2a) in der unten erläuterten Fig. 2, der damit ebenfalls erläutert wird.

Beide Ventilsitze (15, 16) weisen die Grundform eines Kreisringes auf, der durch einen äußeren Kreis mit größerem Durchmesser und einen inneren Kreis mit kleinerem Durchmesser bestimmt ist. Bei beiden Ventilsitzen ist die Fläche zwischen dem äußeren und dem inneren Kreis als Kegelabschnittsfläche ausgebildet, wodurch eine kreisförmige Dichtkante gebildet wird, die bei Auflage auf das entsprechende Elastomer-Dichtelement dieses leicht verformt und den Dichtsitz schließt [die Dichtkante als kreisförmige "Schneide" am inneren Kreis wirkt entsprechend Fig. 1a auf das erste Elastomer-Dichtelement (18) ein; im Falle von Fig. 2a wirkt der zweite Ventilsitz (16) am äußeren Kreis auf das zweite Elastomer-Dichtelement (19) ein].

Der Winkel der Kegelfläche der Ventilsitze (15, 16) gegenüber der Achse beträgt z. B. 85°; zum Schutz der Elastomer-Dichtelemente sind die "Schneiden" der Dichtkanten leicht abgerundet, z. B. mit einem Radius von 0,5 mm.

Der wirksame Durchmesser eines Ventilsitzes ist durch den Durchmesser der Fläche bestimmt, über die Luft mit ihrem Druck auf den Ventilschaltkörper (17) einwirken kann; dies ist die unter Berücksichtigung der Elastomer-Eindrückung freie Fläche am jeweiligen Elastomer-Dichtelement im Zustand des jeweils geschlossenen Dichtsitzes. Da jedoch die Elastomer-Eindrückung vergleichsweise gering ist, ist der wirksame Durchmesser eines Ventilsitzes praktisch nur durch den Durchmesser der kreisförmigen Dichtkante bestimmt.

Für den ersten Ventilsitz (15) nach Fig. 1a ist die oben erwähnte "freie Fläche" durch den Durchmesser (36) bestimmt, welcher bei Vernachlässigung der Elastomer-Eindrückung gleich dem Durchmesser der kreisförmigen Dichtkante ist, und diese ist wiederum durch den inneren Kreis der Kreisring-Grundform des ersten Ventilsitzes (15) festgelegt.

In gleicher Weise ist entsprechend Fig. 2a der Durchmesser (37) der wirksamen Dichtfläche des zweiten Ventilsitzes (16) unter Vernachlässigung der Elastomer-Eindrückung gleich dem Durchmesser der kreisförmigen Dichtkante, und diese ist durch den äußeren Kreis der Kreisring-Grundform des zweiten Ventilsitzes (16) festgelegt.

Entsprechend der in Fig. 1 gezeigten Schnittlinie (1c) ist in Fig. 1c ein Schnitt durch die Umschalt-Ventileinrichtung (12) dargestellt. Die Darstellung zeigt drei Luftkanäle (30), die in Umfangsrichtung um jeweils 120 Grad gegeneinander abgesetzt sind. Es ist mindestens ein Luftkanal (30) vorgesehen, wobei auch mehr als die dargestellten drei Luftkanäle verwendet werden können. Der Querschnitt und die Anzahl der Luftkanäle (30) bestimmt sich aus der erforderlichen Luftleistung im Ventil-Schaltzustand nach Fig. 2, siehe unten.

Bei am pneumatischen Eingang (13) nach Fig. 1 ansteigenden Druck wird die vorstehend erläuterte Schalt-Druckschwelle der Umschalt-Ventileinrichtung (12) erreicht, wenn die von der Druckluft auf den Ventilschaltkörper (17) ausgeübte Druckkraft die Kraft der vorgespannten Umschaltventil-Feder (35) erreicht.

Bei Überschreitung dieser Druckschwelle hebt wie erläutert der Ventilschaltkörper (17) parallel vom ersten Ventilsitz (15) ab, es strömt Druckluft vom pneumatischen Eingang (13)in den Druckraum (40) unterhalb des Ventilschaltkörpers (17) ein, und der sich aufbauende Staudruck schiebt diesen gegen die Kraft der Umschaltventil-Feder (35) auf den zweiten Ventilsitz (16) entsprechend Fig. 2; dies stellt den normalen Schaltvorgang dar.

Im Gegensatz zum Normalfall sei für das Folgende (worst case) angenommen, daß erstens die Umschaltventil-Feder (35) auf der Stützfläche (39) des Ventilschaltkörpers (17) aufgrund von Fertigungstoleranzen verkantet oder verrutscht ist, so daß eine laterale Kraftkomponente entsteht und die erläuterte Querkraftkompensation nicht in vollem Maße wirksam ist, und daß zweitens die spezifizierte minimale Förderleistung am pneumatischen Eingang (13) vorliegt. Dann kann es vorkommen, daß das Ventilschaltelement (17) nicht parallel abhebt, sondern sich einseitig auf einer Stelle am ersten Ventilsitz (15) abstützt und sich gegenüber diesen Abstützpunkt mit einer leichten Kippbewegung minimal gegenüber dem Ventilsitz (15) öffnet, wodurch sich zunächst am Dichtsitz (15, 17) eine geringfügige Leckage einstellt, über die Druckluft vom pneumatischen Eingang (13) in den Druckraum (40) einströmt. Der oben erläuterte Drossel-Ringspalt (24) ist nun derart dimensioniert, daß bei der für die Umschalt-Ventileinrichtung (12) spezifizierten minimalen Förderleistung am pneumatischen Eingang (13) die Drosselwirkung des Drossel-Ringspalts (24) ausreichend groß ist, damit die über den "gekippten" ersten Dichtsitz (15, 17) in den Druckraum (40) einströmende Luftmenge nicht schnell über die Luftkanäle (30) zum pneumatischen Entlüftungs-Ausgang (14) abgeleitet wird, sondern daß sich auch bei dieser geringen Förderleistung ein Staudruck im Druckraum (40) aufbauen kann. Wenn dieser Staudruck dann so groß geworden ist, daß die Vorspannkraft der Umschaltventil-Feder (35) sicher überschritten ist, dann hebt der Ventilschaltkörper (17) vollständig vom ersten Ventilsitz (15) ab und wird über die Druckkraft zum zweiten Ventilsitz (16) entsprechend Fig. 2 geschoben, der damit geschlossen wird.

Ergänzt sei, daß neben der Wirkung des Drossel-Ringspalts (24) auch die Umlenkung der am ersten Ventilsitz (15) einströmenden Luft um 180° für die Ausbildung des Staudrucks im Druckraum (40) ebenfalls einen Beitrag leistet, da mit dieser Umlenkung das Ventilschaltelement (17) als druckerhöhende pneumatische Fangtasche wirkt.

In seiner üblichen Ausführungsform ist ein Ventilschaltglied in einer normalen Längsführung verschieblich angeordnet, so daß das Schaltglied an jeder Position in der gleichen Ausrichtung verbleibt. Die Achse des Führungsrohres ist die Bewegungsachse und fällt mit der Achse des Ventilschaltgliedes zusammen. Damit ist das Ventilschaltglied zwangsgeführt, und der einzige Freiheitsgrad ist die Bewegungsachse.

Aufgrund von Fertigungstoleranzen kann es an einem derartigen üblichen Ventilschaltglied zu Abweichungen von der exakten Rechtwinkligkeit in Bezug auf die Bewegungsrichtung kommen, und dann wird das zwangsgeführte Ventilschaltelement (17) am Ventilsitz (16) längs der kreisförmigen Dichtlinie zunächst einseitig anliegen, womit der Ventilsitz (16) noch nicht geschlossen ist. Erst wenn nach Durchlaufen eines weiteren "Schließhubes" die zusätzliche Elastomer-Eindrückung zur vollständigen Anlage der Dichtlinie führt, ist der Ventilsitz (16) vollständig geschlossen. Entsprechend der Elastomer-Elastizität ist somit für den Schließhub eine bestimmte Schließ-Betätigungskraft erforderlich, die durch eine Druckdifferenz aufgebracht werden muß, und diese Druckdifferenz reduziert die Genauigkeit eines gewünschten exakten Schaltdruckes.

Mit der vorstehend erläuterten balligen Ausführung gibt es für das Ventilschaltglied (17) einen weiteren Freiheitsgrad, da dieses um den Drehmittelpunkt der Balligkeit schwenkbar ist und dadurch sich das zweite Elastomer-Dichtelement (19) praktisch kraftfrei am zweiten Ventilsitz (16) ausrichten kann und die erforderliche Kraft zum vollständigen Schießen der Dichtlinie damit vergleichsweise stark reduziert ist.

In der Schaltstellung der Umschalt-Ventileinrichtung (12) nach Fig. 2 ist dann der pneumatische Eingang (13) mit dem Schaltausgang (32) verbunden, wobei die Luftkanäle (30) dafür sorgen, daß die erforderlichen Luftmengen zum Schaltausgang .(32) übertragbar sind. Zur Sicherstellung dieser Luftmengen ist jetzt zwischen der umlaufenden ringförmigen Gehäuseausformung (23) und dem Ventilschaltkörper (17) ein hinreichender ringförmiger Pneumatikkanal (25) und keine Drosselung mehr vorhanden.

Wie oben erläutert, ist die wirksame Dichtfläche des ersten Ventilsitzes (15), bestimmt durch den Durchmesser (36), kleiner als die wirksame Dichtfläche des zweiten Ventilsitzes (16), die durch den Durchmesser (37) nach Fig. 2a bestimmt ist.

Dadurch ist im geschalteten Zustand die vom Druckraum (40) auf das Ventilschaltglied (17) wirkende, den zweiten Ventilsitz (16) schließende Druckkraft durch die größere wirksame Dichtfläche dieses Ventilsitzes erhöht: Durch die Differenz beider Wirkflächen, d. h. der Differenz-Ringfläche aus der wirksamen Dichtfläche des zweiten Ventilsitzes (16) mit Durchmesser (37) und der wirksamen Dichtfläche des ersten Ventilsitzes (15) mit Durchmesser (36), wird eine Schalthysterese bestimmt. Mit der Einführung der Schalthysterese ist eine Positionsstabilität für die Umschalt-Ventileinrichtung (12) in ihrer Schaltstellung hergestellt: Erst wenn der Druck am pneumatischen Eingang (13) wieder unter die um die Schalthysterese reduzierte Schalt-Druckschwelle abgesunken ist, erfolgt ein Rückschalten in die Ventil-Ausgangsstellung.

Alternativ zu dem unter Fig. 3a erläuterten H-förmigen Ventilschaltkörper (17) ist dieser auch als Π-förmiger Ventilschaltkörper (38) nach Fig. 3b realisierbar.

In dieser Ausführungsform erstreckt sich der Führungskörper (42), ausgehend von dem kreisscheibenförmigen Schließkörper (41) mit dem ersten (18) und dem zweitem (19) Elastomer-Dichtelement, welche in diesem Fall in entsprechende Ausnehmungen des Schließkörpers (41) z. B. anvulkanisiert sind, räumlich in Richtung des ersten Ventilsitzes [vgl. Fig. 4], wodurch ein Ventilschaltkörper mit Π-förmigen Querschnitt gebildet ist. Wie bereits zu Fig. 3a erläutert, ist die Stützfläche (39) für die Umschaltventil-Feder (35) [vgl. Fig. 4] wiederum mittig zwischen den zu den jeweiligen Ventilsitzen weisenden Flächen der Elastomer-Dichtelement (18) und (19) angeordnet, so daß die Querkraftkomponente der Umschaltventil-Feder (35) in der Mittelebene des Ventilschaltgliedes (38) eingreift und die Querkraftkompensation stattfindet.

Fig. 4 zeigt den Π-förmigen Ventilschaltkörper (38) nach Fig. 3b, eingesetzt in das Gehäuse (29) für eine Umschalt-Ventileinrichtung (12) nach Fig. 1 in der Ventil-Aüsgangsstellung. Die Zeichnungen Fig. 4, Fig. 4a und Fig. 4b sind, außer dem Austausch des H-förmigen Ventilschaltkörpers (17) durch den Π-förmigen Ventilschaltkörper (38), vollständig identisch, so daß die diesbezüglichen vorstehenden Beschreibungsteile zu Fig. 1, Fig. 1a und Fig. 1b in gleicher Weise auch für die Ausführungsform nach Fig. 4 gelten; auch die Darstellung der Luftkanäle (30) nach Fig. 1c ist voll übertragbar, weshalb auf eine separate Darstellung verzichtet wird.

Für die Darstellung der Umschalt-Ventileinrichtung (12) mit dem Π-förmigen Ventilschaltkörper (38) in der Ventil-Schaltstellung wird auf Fig. 2 verwiesen; in gleicher Weise, wie Fig. 4 durch Austausch des Ventilschaltkörpers (17) durch den Ventilschaltkörper (38) entstanden ist, kann der Ventilschaltkörper (17) in Fig. 2 durch den Ventilschaltkörper (38) nach Fig. 3b ersetzt werden; die Ventilschaltvorgänge sind identisch zu den unter Fig. 2 beschriebenen Vorgängen.

Im übrigen ist in den Darstellungen nach Fig. 5 und Fig. 7 eine Umschalt-Ventileinrichtung mit einem Π-förmigen Ventilschaltglied (38) in der Ventil-Schaltstellung gezeigt; bei diesen Darstellungen ist die Umschalt-Ventileinrichtung als Vorsteuerventil in ein Anhängerbremsventil integriert.

In Fig. 5 ist die Umschalt-Ventileinrichtung (12) nach Fig. 4 in den Ventilschieber (10) eines in der D1 beschriebenen Anhängerbremsventils (8) [D1: Anhängerbremsventil dort Fig. 4, (8)] derart integriert, daß diese das dortige Vorsteuerventil [dort(60)] ersetzt, wobei der unten erläuterte Versorgungsanschluß (1) des Anhängerbremsventils (8) über den Pneumatikkanal (25) im Ventilschieber (10) mit dem Eingang (13) der Umschalt-Ventileinrichtung (12) verbunden ist; der drucklose Eingang (13) der Umschalt-Ventileinrichtung (12) entpricht dabei der drucklosen Ventil-Abrißstellung des Anhängerbremsventils.

Am Anhängerbremsventil (8) nach Fig. 5 sind die folgenden pneumatischen Anschlüsse vorgesehen:
- ein Versorgungsanschluß (1), der im Anhänger mit dem roten Kupplungskopf für den Vorrats-Druckschlauch verbunden ist;
- ein Bremsvorgabeanschluß (4), der im Anhänger mit dem gelben Kupplungskopf für den Brems-Druckschlauch verbunden ist;
- ein Behälteranschluß (3), der im Anhänger mit dem Druckluft-Vorratsbehälter verbunden ist;
- ein Bremsdruckanschluß (2) zur Ausgabe des Bremsdruckes an die Bremseinrichtung des Anhängers;
- ein Löseanschluß (5) zum Anschluß eines Löseventils für das Lösen der Feststellbremsen eines abgestellten Anhängers;
- eine Anhängerbremsventil-Entlüftung (28) zur Atmosphäre.

Um das Prinzip zu zeigen, daß nämlich der Behälteranschluß (3) und der Löseanschluß (5) im Anhängerbremsventil (8) zum gleichen internen Druckraum führen, sind diese Anschlüsse in Fig. 5 als ein gemeinsamer Anschluß dargestellt; üblicherweise sind diese Anschlüsse jedoch aus Verrohrungsgründen als separate Anschlüsse ausgeführt.

Entsprechend Fig. 5 ist in der Ventil-Ausgangsstellung der Umschalt-Ventileinrichtung (12) der Kolbenraum (34) für den Ventilschieber (10) über einen im Ventilschieber (10) angeordneten Druckkanal (33), den Schaltausgang (32) und den pneumatischen Entlüftungs-Ausgang (14) der Umschalt-Ventileinrichtung (12), und schließlich die Anhängerbremsventil-Entlüftung (28) entlüftet, und so ist durch die Wirkung der Rückstellfeder (11) in der nach Fig. 5 vorliegenden Ventil-Abrißstellung des Anhängerbremsventils (8) der Ventilschieber (10) an den zweiten Anschlag (27) angelegt [ein erster Anschlag (26) wird im Zusammenhang mit Fig. 6 erläutert].

In der in Fig. 5 gezeigten Ventil-Ausgangsstellung der Umschalt-Ventileinrichtung (12) sind über pneumatische Kanäle im Ventilschieber (10) des Anhängerbremsventils (8) die folgenden Verbindungen zwischen den oben genannten Anschlüssen hergestellt:
- Der am Versorgungsanschluß (1) anliegende Druckraum ist zwar über den geschlossenen ersten Ventilsitz (15) der Umschalt-Ventileinrichtung (12)pneumatisch abgeschlosssen, jedoch ist über das Rückschlagventil (6) eine pneumatische Verbindung zum Behälteranschluß (3) hergestellt;
- der Bremsdruckanschluß (2) ist mit dem Behälteranschluß (3) verbunden.

In der Darstellung des Anhängerbremsventils (8) nach Fig. 6 liegt am Versorgungsanschluß (1) ein Druck an, der die Druck-Schaltschwelle der Ventil-Umschalteinrichtung (12) überschreitet; in der oben erläuterten Weise hebt der Ventilschaltkörpers (17) vom ersten Ventilsitz (15) ab und legt sich an den zweiten Ventilsitz (16) an.

Der am Versorgungsanschluß (1) anliegende Druck wird nun über den pneumatischen Eingang (13) und den Schaltausgang (32) der Umschalt-Ventileinrichtung (12) in den Druckkanal (33) und in den Kolbenraum (34) übertragen, und entsprechend der wirksamen Kolbenfläche des ventilschiebers (10) bildet sich eine Druckkraft auf den Ventilschieber (10) aus, welche die Kraft der vorgespannten Rückstellfeder (11) überwindet und den Ventilschieber (10) gegen den ersten Anschlag (26) schiebt, wo er zur Anlage kommt.

Bei der in Fig. 6 gezeigten Ventil-Schaltstellung der Umschalt-Ventileinrichtung (12) sind über pneumatische Kanäle im Ventilschieber (10) folgende Verbindungen zwischen den Anschlüssen des Anhängerbremsventils (8) hergestellt:
- Der Versorgungsanschluß (1) ist über das Rückschlagventil (6) mit dem Behälteranschluß (3) verbunden;
- der Bremsdruckanschluß (2) ist mit dem Bremsvorgabeanschluß (4) verbunden.

Entsprechend der zu Fig. 5 erläuterten Art und Weise ist in Fig. 7 die Umschalt-Ventileinrichtung (12) nach Fig. 4 in den Ventilschieber (20) eines in der D2 beschriebenen Anhängerbremsventils (9) integriert [D2: Anhängerbremsventil dort Fig. 5, (8), Ventilschieber dort (10)].

Entsprechend der D2 ist daher im Gehäuse des Anhängerbremsventils (9) als weiterer Anschluß ein Parkanschluß (21) vorgesehen, der in der Ventil-Ausgangsstellung der Umschalt-Ventileinrichtung (12) und damit in der Abrißstellung des Anhängerbremsventils (9) nach Fig. 7 über den pneumatischen Kanal (31) direkt mit dem Behälteranschluß (3) verbunden ist.

Die weiteren Verbindungen zwischen den Anschlüssen des Anhängerbremsventils (9) in der Ventil-Abrißstellung nach Fig. 7 sind identisch zu der unter Fig. 5 erläuterten Verbindung des Anhängerbremsventils (8) in dessen Ventil-Abrißstellung.

In Fig. 8 liegt am Versorgungseingang (1) des Anhängerbremsventils (9) ein die Druckschwelle der Umschalt-Ventileinrichtung (12) überschreitender Druck an, so daß in der oben erläuterten Weise der Ventilschaltkörper (17) am zweiten Ventilsitz (16) anliegt, und entsprechend der ebenfalls erläuterten Wirkung der Umschalt-Ventileinrichtung (12) als Vorsteuerventil der Ventilschieber (20) gegen die Vorspannkraft der Rückstellfeder (11) an den ersten Anschlag (26) gefahren wird, wodurch das Anhängerbremsventil (9) seine Grundstellung einnimmt.

In dieser Stellung sind für das Anhängerbremsventil (9) die unter Fig. 6 erläuterten Verbindungen für das Anhängerbremsventil (8) hergestellt. Zusätzlich zu diesen Verbindungen ist der Parkanschluß (21) über das weitere Rückschlagventil (7) mit dem Behälteranschluß (3) verbunden.

Bezogen auf den Parkanschluß (21) sind also alternativ in Fig. 7 und Fig. 8 folgende Verbindungen realisiert:
- In der Ventil-Ausgangsstellung der Umschalt-Ventileinrichtung (12) nach Fig. 7 ist der Parkanschluß (21) direkt mit dem Behälteranschluß (3) verbunden;
- in der Ventil-Schaltstellung der Umschalt-Ventileinrichtung (12) nach Fig. 8 ist der Parkanschluß (21) über das weitere Rückschlagventil (7) mit dem Behälteranschluß (3) verbunden.

Mit der Verbindung des Parkanschlusses (21) nach Fig. 7 ist die eingangs erläuterte zusätzliche Sicherheit bei einem ohne eingefallene Federspeicherbremsen abgestellten Anhänger [nicht betätigtes Federspeicher-Löseventil] gewährleistet, indem bei jedem Druckniveau des Druckvorrats-Behälters im Anhänger eine Restbremswirkung für den Anhänger vorhanden ist, die entweder von den Betriebs- oder von den Feststellbremsen kommt.

Um zu zeigen, daß sich die vorstehend beschriebene Ventiltechnik, insbesondere ein Ventilschaltkörper (17) nach Fig. 3a mit den in Fig. 1 gezeigten ergänzenden Mitteln für ein definiertes Umschalten auch auf andere Ventilkonstruktionen anwendbar ist, sind in Fig. 9 und Fig. 10 Anwendungen dieser Ventiltechnik auf ein Wechselventil (45) bzw. ein Rückschlagventil (46) dargestellt; im übrigen kann in diesen Darstellungen das H-förmige Ventilschaltglied (17) auch durch ein Π-förmiges Ventilschaltglied (38) ersetzt werden.

Beim Wechselventil (45) nach Fig. 9, das auch als Doppelrückschlagventil bezeichnet wird und dessen pneumatisches Schaltungssysymbol in Fig. 9a gezeigt ist, wird der größere der an den beiden Eingangs-Anschlüssen (13) und (14) anliegende Druck am Ausgang (32) ausgegeben; dies entspricht der "Select-High"-Funktion.

Da die Umschaltung nur aufgrund der anliegenden Drücke erfolgen soll, ist keine Rückstellfeder vorgesehen, und zum Druckvergleich weisen die Ventilsitze (15, 16) einen identischen wirksamen Durchmesser auf [sollen die Drücke nicht direkt, sondern "gewichtet" verglichen werden, so besteht auch die Möglichkeit, beide Ventilsitze mit unterschiedlichen wirksamen Durchmessern auszurüsten].

Im Fall, daß der am Eingang (13) anliegende Druck kleiner ist als der am Eingang (14) anliegende Druck, liegt, wie in Fig. 9 dargestellt, der Ventilschaltkörper (17) am ersten Ventilsitz (15) auf, und der am Eingang (14) anliegende Druck wird zum Ausgang (32) durchgesteuert. Überwiegt dagegen der am Eingang (13) anliegende Druck, so wird das Ventilschaltglied (17) an den zweiten Ventilsitz (16) angelegt, und der Druck des Eingangs (13) wird zum Ausgang (32) übertragen.

Für diesen Umschaltvorgang vom ersten Ventilsitz (15) zum zweiten Ventilsitz (16) sind die vorstehend erläuterten Vorteile einer balligen Ausführung des Ventilschaltkörpers (17), der zu einem exakt definierten Umschaltdruck führt, und die Maßnahmen einer Fangtasche und des Drossel-Ringspalts (24) zur Einhaltung dieses Schaltdrucks auch bei sehr langsamer Druckerhöhung ebenfalls wirksam.

Die Konstruktion zeichnet sich also durch einen exakt definierten Schaltpunkt und einen sehr geringen Umschalt-Luftstrom aus.

Für das Rückschlagventil (46) nach Fig. 10 [Darstellung des pneumatischen Schaltsymbols unter Fig. 10a] ist nur ein Ventilsitz (15) vorgesehen, da im geschalteten Zustand das Ventilschaltglied (17) an einem Stützkörper (44) anliegt. Entsprechend seiner Funktion gibt das Rückschlagventil einen Durchgang nur in einer Richtung, nämlich vom Eingang (13) zum Ausgang (32) frei; in dieser Schaltstellung ist das Ventil in Fig. 10 gezeichnet: Ein gegenüber dem Druck am Ausgang (32) stark überwiegender Druck am Eingang (13) bewirkt, daß das Ventilschaltglied, gegen die Kraft der Rückstellfeder (35) an den Stützkörper (44) angelegt ist. Für das Umschalten von der Ausgangsstellung [Ventilschaltkörper (17) liegt am Ventilsitz (15) an] zum vollendeten Schaltezustand [Anlegen des Ventilkörpers (17) an den Stützkörper (44)] gelten auch hier die erläuterten Vorteile eines exakten Umschaltdruckes und eines minimalen Ventil-Umschalt-Luftstromes.

## Patentansprüche

1. Pneumatische Umschalt-Ventileinrichtung (12) mit
a) einem pneumatischen Eingang (13), einem pneumatischen Entlüftungs-Ausgang (14) und einem federbelasteten Ventilschaltglied, welches bei drucklosem Eingang, der Ventil-Ausgangsstellung, an einen ersten Ventilsitz (15), und im Fall, daß ein am Eingang anliegender Druck eine festgelegte Druckschwelle überschreitet, der Ventil-Schaltstellung, in Richtung der Ventilschaltglied-Betätigungsrichtung verschoben und an einen zweiten Ventilsitz (16) angelegt ist, wobei der erste Ventilsitz (15) einen kleineren wirksamen Durchmesser als der zweite Ventilsitz (16) aufweist, wobei
b) das Ventilschaltglied als rotationssymmetrischer Ventilschaltkörper (17) ausgebildetist,
c) der Ventilschaltkörper (17) in einer kreiszylindrischen Führungsfläche (22) im Ventilgehäuse (29) gleitend und verschieblich gelagertist, wobei die Kreiszylinderachse die Ventilschaltglied-Betätigungsrichtung darstellt;
d) wobei der Ventilschaltkörper (17) aus einem senkrecht zur Kreiszylinderachse ausgerichteten kreisrunden Schließkörper (41) und einem hermetisch dicht mit diesem verbundenen, als rotationssymmetrischer Hohlkörper ausgebildeten Führungskörper (42) besteht, dessen Achse die Kreiszylinderachse darstellt,
e) wobei der hohlkörperförmige Führungskörper (42) sich räumlich, ausgehend von dem Schließkörper (41), mindestens in Richtung des ersten Ventilsitzes (15) erstreckt,
f) wobei der hohlkörperförmige Führungskörper (42) so ausgebildet und so zum ersten Ventilsitz (15) angeordnet ist, daß er durch Umlenken der am ersten Ventilsitz (15) in einen Druckraum (40) einströmenden Luft als pneumatische Fangtasche wirkt, wodurch die Bildung von Staudruck in dem Druckraum (40) bewirkt wird,
g) wobei zur Anlage an den ersten (15) bzw. zweiten (16) Ventilsitz am Schließkörper (41) ein erstes (18) und ein zweites (19) Elastomer-Dichtelement befestigt ist.

2. Umschalt-Ventileinrichtung nach Anspruch 1, **dadurch gekennzeichnet, daß** sich der hohlkörperförmige Führungskörper (42) räumlich, ausgehend von dem Schließkörper (41), in Richtung des ersten Ventilsitzes (15) erstreckt, wodurch ein Ventilschaltkörper (38) mit einem II-förmigen Querschnitt gebildet ist.

3. Umschalt-Ventileinrichtung nach Anspruch 1, **dadurch gekennzeichnet, daß** sich der hohlkörperförmige Führungskörper (42) räumlich, ausgehend von dem Schließkörper (41), sowohl in Richtung des ersten Ventilsitzes (15), als auch in Richtung des zweiten Ventilsitzes (16) erstreckt, wodurch ein Ventilschaltkörper (17) mit einem H-förmigen Querschnitt gebildet ist.

4. Umschalt-Ventileinrichtung nach Anspruch 1, **dadurch gekennzeichnet, daß** der hohlkörperförmige Führungskörper (42) in Richtung zu der kreiszylindrischen Führungsfläche (22) im Ventilgehäuse (29) mit einer tonneförmig geformten, konvex gewölbten Außenfläche ausgestattet ist, welche bei der Verschiebung des Führungskörpers entlang der kreiszylindrischen Führungsfläche (22) diese jeweils längs einer Umfangs-Kreislinie berührt.

5. Umschalt-Ventileinrichtung nach Anspruch 1, **gekennzeichnet durch** die folgenden Merkmale:
a) Die kreiszylindrische Führungsfläche (22) im Ventilgehäuse (29) ist an mindestens einer Stelle mit einer umlaufenden ringförmigen, den Durchmesser verengenden Ausformung (23) versehen;
b) in der Ventil-Ausgangsstellung der Umschalt-Ventileinrichtung ist an der Stelle der Ausformung (23) zwischen dem Ventilschaltkörper (17, 38) und der Ausformung (23) ein schmaler Leckage-Ringspalt (24) festgelegter Breite gebildet.

6. Umschalt-Ventileinrichtung nach Anspruch 1, **dadurch gekennzeichnet, daß** im Ventilgehäuse (29), als Ausnehmung in der kreiszylindrischen Führungsfläche (22) mindestens ein, den Ventilschaltkörper pneumatisch überbrückender Luftkanal (30) vorgesehen ist.

7. Umschalt-Ventileinrichtung nach Anspruch 1, **gekennzeichnet durch** die folgenden Merkmale:
a) Ein Ventilsitz (15, 16) weist die Grundform eines Kreisringes auf, der **durch** einen äußeren Kreis mit größerem Durchmesser und einen inneren Kreis mit kleinerem Durchmesser bestimmt ist;
b) **durch** Ausbildung der Fläche zwischen dem äußeren und dem inneren Kreis als Kegelabschnittsfläche ist eine kreisförmige Dichtkante gebildet, die im wesentlichen entweder **durch** den äußeren oder den inneren Kreis der Kreisring-Grundform festgelegt ist;
c) der wirksame Durchmesser des Ventilsitzes (36, 37) ist **durch** den Durchmesser der kreisförmigen Dichtkante bestimmt.

8. Umschalt-Ventileinrichtung nach Anspruch 7, **gekennzeichnet durch** die folgenden Merkmale:
a) Für den ersten Ventilsitz (15) ist die kreisförmige Dichtkante **durch** den inneren Kreis der Kreisring-Grundform des ersten Ventilsitzes festgelegt;
b) für den zweiten Ventilsitz ist die kreisförmige Dichtkante **durch** den äußeren Kreis der Kreisring-Grundform des zweiten Ventilsitzes festgelegt.

9. Umschalt-Ventileinrichtung nach mindestens einem der vorstehenden Ansprüche, **gekennzeichnet durch** die folgenden Merkmale:
a) Die Umschalt-Ventileinrichtung (12) ist in den Ventilschieber (10) eines als Schieberventil aufgebauten Anhängerbremsventils (8) mit einer Ventil-Abrißstellung und einer Ventil-Grundstellung integriert, das mindestens über die pneumatischen Anschlüsse eines Versorgungsanschlusses (1), eines Bremsvorgabeanschlusses (4), eines Behälteranschlusses (3), eines Löseanschlusses (5) und über einen Anschluß (28) für die Ventilentlüftung verfügt, wobei der Behälteranschluß (3) und der Löseanschluß (5) als ein gemeinsamer Anschluß ausgeführt sein können;
b) der pneumatische Eingang (13) der Umschalt-Ventileinrichtung (12) ist mit dem Versorgungsanschluß (1) und der pneumatische Entlüftungs-Ausgang (14) der Umschalt-Ventileinrichtung (12) ist mit dem Ventilentlüftungs-Anschluß (28) verbunden;
c) die Ventil-Abrißstellung des Anhängerbremsventils (8) ist in der Ventil-Ausgangsstellung der Umschalt-Ventileinrichtung (12) und die Ventil-Grundstellung des Anhängerbremsventils (8) ist in der Ventil-Schaltstellung der Umschalt-Ventileinrichtung (12) eingenommen.

10. Umschalt-Ventileinrichtung nach Anspruch 9, **dadurch gekennzeichnet, daß** als weiterer pneumatischer Anschluß ein Parkanschluß (21) vorgesehen ist.

11. Umschalt-Ventileinrichtung nach Anspruch 9, **gekennzeichnet durch** die folgenden Merkmale:
a) über pneumatische Kanäle im Ventilschieber (10) des Anhängerbremsventils (8) sind in der Ventil-Ausgangsstellung der Umschalt-Ventileinrichtung erstens der Versorgungsanschluß pneumatisch abgeschlosssen und zweitens der Bremsdruckanschluß (2) mit dem Behälteranschluß (3) verbunden;
b) über pneumatische Kanäle im Ventilschieber (10) des Anhängerbremsventils (8) sind in der Ventil-Schaltstellung der Umschalt-Ventileinrichtung erstens der Versorgungsanschluß (1) mit dem Behälteranschluß (3) und zweitens der Bremsdruckanschluß (2) mit dem Bremsvorgabeanschluß (4) verbunden.

12. Umschalt-Ventileinrichtung nach Anspruch 10, **gekennzeichnet durch** die folgenden Merkmale:
a) In der Ventil-Ausgangsstellung der Umschalt-Ventileinrichtung (12) ist der Parkanschluß (21) direkt mit dem Behälteranschluß (3) verbunden;
b) in der Ventil-Schaltstellung der Umschalt-Ventileinrichtung (12) ist der Parkanschluß (21) über ein Rückschlagventil (7) mit dem Behälteranschluß (3) verbunden.

## Claims

1. Pneumatic change-over valve device (12) having
a) a pneumatic inlet (13), a pneumatic venting outlet (14) and a spring-loaded valve switching component, which, when the inlet is without pressure, corresponding to the valve starting-position, is applied to a first valve seat (15), and in the event that a pressure present at the inlet exceeds a fixed pressure threshold, corresponding to the valve switching-position, is displaced in the direction of the valve switching component operating direction and is applied to a second valve seat (16), wherein the first valve seat (15) has a smaller effective diameter than the second valve seat (16), wherein
b) the valve switching component is in the form of a rotationally symmetric valve switching element (17),
c) the valve switching element (17) is slidably and displaceably mounted in a circular cylindrical guide face (22) in the valve housing (29), the circular cylinder axis representing the operating direction of the valve switching component,
d) wherein the valve switching element (17) comprises a circular closing element (41) aligned perpendicular to the circular cylinder axis, and a guide element (42) in the form of a rotationally symmetric hollow body connected thereto with a hermetic seal, the axis of which represents the circular cylinder axis,
e) wherein the guide element (42) in the form of a hollow body extends three-dimensionally, starting from the closing element (41), at least towards the first valve seat (15),
f) wherein the guide member (42) in the form of a hollow body is constructed and arranged with respect to the first valve seat (15) so that, by diverting the air flowing in at the first valve seat (15) into a pressure chamber (40), it acts as a pneumatic trapping pocket, thereby causing the formation of back-up pressure in the pressure chamber (40),
g) wherein for engagement with the first (15) and the second (16) valve seat respectively a first (18) and a second (19) elastomeric sealing element are secured to the closing element (41).

2. A change-over valve device according to claim 1, **characterized in that** the guide element (42) in the form of a hollow body extends three-dimensionally, starting from the closing element (41), towards the first valve seat (15), whereby a valve switching element (38) having a II-shaped cross-section is formed.

3. A change-over valve device according to claim 1, **characterized in that** the guide element (42) in the form of a hollow body extends three-dimensionally, starting from the closing element (41), both towards the first valve seat (15) and towards the second valve seat (16), whereby a valve switching element (17) having an H-shaped cross-section is formed.

4. A change-over valve device according to claim 1, **characterized in that** the guide element (42) in the form of a hollow body is equipped in the direction towards the circular cylindrical guide face (22) in the valve housing (29) with a barrel-shaped, convexly curved outer surface which, when the guide element is displaced along the circular cylindrical guide face (22), contacts this along a circumferential circular line at any one time.

5. A change-over valve device according to claim 1, **characterized by** the following features:
a) the circular cylindrical guide face (22) in the valve housing (29) is provided at at least one location with a circumferential, annular moulding (23) reducing the diameter;
b) in the valve starting-position of the change-over valve device, at the location of the moulding (23) a narrow, annular leakage gap (24) of fixed width is formed between the valve switching element (17, 38) and the moulding (23).

6. A change-over valve device according to claim 1, **characterized in that** in the valve housing (29) at least one air channel (30) pneumatically bridging the valve switching element is provided in the form of a recess in the circular cylindrical guide face (22).

7. A change-over valve device according to claim 1, **characterized by** the following features:
a) a valve seat (15, 16) has the basic form of a circular ring, which is determined by an outer circle of relatively large diameter and an inner circle of relatively small diameter;
b) by constructing the surface between the outer and the inner circles as the face of a segment of a cone, a circular sealing edge is formed, which is defined essentially either by the outer or by the inner circle of the circular ring basic form;
c) the effective diameter of the valve seat (36, 37) is determined by the diameter of the circular sealing edge.

8. A change-over valve device according to claim 7, **characterized by** the following features:
a) for the first valve seat (15), the circular sealing edge is defined by the inner circle of the circular ring basic form of the first valve seat;
b) for the second valve seat, the circular sealing edge is defined by the outer circle of the circular ring basic form of the second valve seat.

9. A change-over valve device according to at least one of the preceding claims, **characterized by** the following features:
a) the change-over valve device (12) is integrated in the valve slide (10) of a trailer brake valve (8) in the form of a slide valve with a valve separation-position and a valve normal-position, the trailer brake valve possessing at least the pneumatic connections of a supply connection (1), a brake preset connection (4), a tank connection (3), a release connection (5) and a connection (28) for removing air from the valve, wherein the tank connection (3) and the release connection (5) can be constructed as a common connection;
b) the pneumatic inlet (13) of the change-over valve device (12) is connected to the supply connection (1) and the pneumatic venting outlet (14) of the change-over valve device (12) is connected to the valve venting connection (28);
c) the valve separation-position of the trailer brake valve (8) is assumed in the valve starting-position of the change-over valve device (12) and the valve normal-position of the trailer brake valve (8) is assumed in the valve switching-position of the change-over valve device (12).

10. A change-over valve device according to claim 9, **characterised in that** a parking connection (21) is provided as a further pneumatic connection.

11. A change-over valve device according to claim 9, **characterised by** the following features:
a) via pneumatic channels in the valve slide (10) of the trailer brake valve (8), in the valve starting-position of the change-over valve device first of all the supply connection is pneumatically closed and secondly the brake pressure connection (2) is connected to the tank connection (3);
b) via pneumatic channels in the valve slide (10) of the trailer brake valve (8), in the valve switching-position of the change-over valve device first of all the supply connection (1) is connected to the tank connection (3) and secondly the brake pressure connection (2) is connected to the brake preset connection (4).

12. A change-over valve according to claim 10, **characterised by** the following features:
a) in the valve starting-position of the change-over valve device (12), the parking connection (21) is connected directly to the tank connection (3);
b) in the valve switching-position of the change-over valve device (12), the parking connection (21) is connected via a non-return valve (7) to the tank connection (3).

## Revendications

1. Dispositif de commutation pneumatique (12) comportant :
a) une entrée pneumatique (13), une sortie d'aération pneumatique (14) et un élément de commutation de soupape chargé par ressort, lequel, pour une entrée sans pression, de la position initiale de soupape, sur un premier siège de soupape (15) et dans le cas où une pression à l'entrée dépasse un seuil de pression fixé, de la position de commutation de soupape, en direction du sens d'actionnement de l'élément de commutation de soupape, est déplacé et installé sur un second siège de soupape (16), le premier siège de soupape (15) comportant un diamètre efficace inférieur à celui du second siège de soupape (16),
b) l'organe de commutation de soupape étant réalisé sous la forme d'élément de commutation de soupape à symétrie de révolution (17),
c) le corps de commutation de soupape (17) étant logé de manière à pouvoir glisser et se déplacer dans une surface de guidage cylindrique circulaire (22) dans la boîte à soupape (29), l'axe cylindrique circulaire représentant le sens d'actionnement de l'élément de commutation de soupape,
d) le corps de commutation de soupape (17) étant composé d'un élément d'obturation circulaire (41) orienté verticalement à l'axe du cylindre circulaire et d'un élément de guidage (42) raccordé à celui-ci de manière hermétique, réalisé sous la forme d'un élément creux à symétrie de révolution, élément de guidage dont l'axe représente l'axe cylindrique circulaire,
e) l'élément de guidage en forme d'élément creux (42) s'étendant, dans l'espace, à partir de l'élément d'obturation (41), au moins en direction du premier siège de soupape (15),
f) l'élément de guidage en forme d'élément creux (42) étant réalisé et disposé, par rapport au premier siège de soupape (15), de telle sorte qu'il joue le rôle d'une poche collectrice pneumatique par la déviation de l'air pénétrant dans une chambre de pression (40), sur le premier siège de soupape (15), moyen par lequel est réalisée la formation de pression de retenue dans la chambre de pression (40),
g) un premier (18) et un second (19) élément d'étanchéité élastomère étant fixés sur l'élément d'obturation (41) pour l'appui sur le premier (15) ou le second siège de soupape (16).

2. Dispositif de commutation selon la revendication 1, **caractérisé en ce que** l'élément de guidage en forme d'élément creux (42) s'étend, dans l'espace, à partir de l'élément d'obturation (41) en direction du premier siège de soupape (15), moyen par lequel un élément de commutation de soupape (38) est réalisé avec une coupe transversale en forme de II.

3. Dispositif de commutation selon la revendication 1, **caractérisé en ce que** l'élément de guidage en forme d'élément creux (42) s'étend, dans l'espace, à partir de l'élément d'obturation (41), à la fois en direction du premier siège de soupape (15) et en direction du second siège de soupape (16), moyen par lequel un élément de commutation de soupape (17) est réalisé avec une coupe transversale en forme de H.

4. Dispositif de commutation selon la revendication 1, **caractérisé en ce que** l'élément de guidage en forme d'élément creux (42) est équipé, en direction de la surface de guidage cylindrique circulaire (22), dans la boîte à soupape (29), d'une surface externe en forme de cuve, voûtée de manière convexe, laquelle surface externe touche, lors du déplacement de l'élément de guidage le long de la surface de guidage cylindrique circulaire (22), cette dernière le long d'une ligne circulaire circonférentielle.

5. Dispositif de commutation selon la revendication 1, **caractérisé par** les caractéristiques suivantes :
a) la surface de guidage cylindrique circulaire (22) dans la boîte à soupape (29) est munie, au moins à un emplacement, d'une formation (23) annulaire rétrécissant le diamètre.
b) dans la position initiale de soupape du dispositif de commutation, à l'emplacement de la formation (23), entre l'élément de commutation de soupape (17, 38) et la formation (23), est formée une fente annulaire de fuite étroite (24) d'une largeur fixée.

6. Dispositif de commutation selon la revendication 1, **caractérisé en ce que**, dans la boîte à soupape (29), on a prévu comme cavité dans la surface de guidage cylindrique circulaire (22) au moins un canal d'air (30) réalisant la jonction à l'élément de commutation de soupape de manière pneumatique.

7. Dispositif de commutation selon la revendication 1, **caractérisé par** les caractéristiques suivantes :
a) un siège de soupape (15, 16) comporte la forme de base d'un anneau circulaire qui est déterminé par un cercle externe avec un diamètre supérieur et un cercle interne avec un diamètre inférieur,
b) par la configuration de la surface entre le cercle externe et interne sous forme de surface de section de cône, on forme une arête d'étanchéité circulaire qui est sensiblement fixée soit par le cercle externe soit par le cercle interne de la forme de base de l'anneau circulaire,
c) le diamètre efficace du siège de soupape (36, 37) est déterminé par le diamètre de l'arête d'étanchéité circulaire.

8. Dispositif de commutation selon la revendication 7, **caractérisé par** les caractéristiques suivantes :
a) pour le premier siège de soupape (15), l'arête d'étanchéité circulaire est fixée par le cercle interne de la forme de base de l'anneau circulaire du premier siège de soupape,
b) pour le second siège de soupape (15), l'arête d'étanchéité circulaire est fixée par le cercle externe de la forme de base de l'anneau circulaire du second siège de soupape.

9. Dispositif de commutation selon au moins l'une quelconque des revendications précédentes, **caractérisé par** les caractéristiques suivantes :
a) le dispositif de commutation (12) est intégré dans le tiroir de soupape (10) d'une soupape de freinage pour remorque (8), construite sous la forme de soupape à tiroir, comportant une position de décollement de la soupape et une position de base de la soupape, soupape de freinage qui dispose au moins des raccords pneumatiques d'un raccord d'alimentation (1), d'un raccord de sélection du freinage (4), d'un raccord de réservoir (3), d'un raccord de détachement (5) et d'un raccord (28) pour l'aération de soupape, le raccord de réservoir (3) et le raccord de détachement (5) pouvant être réalisés sous la forme de raccord commun,
b) l'entrée pneumatique (13) du dispositif de commutation (12) est reliée au raccord d'alimentation (1) et la sortie d'aération pneumatique (14) du dispositif de commutation (12) est reliée au raccord d'aération de la soupape (28),
c) la position de décollement de soupape de la soupape de freinage de la remorque (8) est dans la position initiale de soupape du dispositif de commutation (12) et la position de base de soupape de la soupape de freinage de la remorque (8) est dans la position de commutation de soupape du dispositif de commutation (12).

10. Dispositif de commutation selon la revendication 9, **caractérisé en ce qu'**on a prévu un raccord de parking (21) comme raccord pneumatique supplémentaire.

11. Dispositif de commutation selon la revendication 9, **caractérisé par** les caractéristiques suivantes :
a) par le biais de canaux pneumatiques dans le tiroir de soupape (10) de la soupape de freinage de la remorque (8), dans la position initiale de soupape du dispositif de commutation, premièrement le raccord d'alimentation est fermé du point de vue pneumatique et, deuxièmement, le raccordement de pression de freinage (2) est relié au raccord de réservoir (3),
b) par le biais de canaux pneumatiques dans le tiroir de soupape (10) de la soupape de freinage de la remorque (8), dans la position de commutation de la soupape du dispositif de commutation, premièrement le dispositif d'alimentation (1) est relié au raccord de réservoir (3) et, deuxièmement, le raccord de pression de freinage (2) est relié au raccord de sélection de freinage (4) .

12. Dispositif de commutation selon la revendication 10, **caractérisé par** les caractéristiques suivantes :
a) dans la position initiale de soupape du dispositif de commutation (12), le raccord de parking (21) est directement relié au raccord de réservoir (3),
b) dans la position de commutation de soupape du dispositif de commutation (12), le raccord de parking (21) est relié au raccord de réservoir (3) par le biais d'une soupape anti-retour (7).
